# EUROPÄISCHE PATENTSCHRIFT

(11) **EP 3 448 728 B1**
(45) Veröffentlichungstag und Bekanntmachung des Hinweises auf die Patenterteilung: **20.10.2021**
(21) Anmeldenummer: 17721573.8
(22) Anmeldetag: 25.04.2017
(51) Int. Cl.: B60T 8/18, B60T 8/17, B60T 8/32

(54) **VORRICHTUNG UND VERFAHREN ZUR OPTIMIERUNG DER KRAFTSCHLUSS-AUSNUTZUNG ZWISCHEN RAD UND SCHIENE**
DEVICE AND METHOD FOR OPTIMIZING THE UTILIZATION OF FRICTIONAL LOCKING BETWEEN A WHEEL AND A RAIL
DISPOSITIF ET PROCÉDÉ POUR OPTIMISER L'UTILISATION DE L'ADHÉRENCE ENTRE LA ROUE ET LE RAIL

(30) Priorität: 29.04.2016 DE 102016005248
(43) Veröffentlichungstag der Anmeldung: 06.03.2019
(73) Patentinhaber: KNORR-BREMSE Systeme für Schienenfahrzeuge GmbH, 80809 München (DE)
(72) Erfinder: HERDEN, Marc-Oliver, 81377 München (DE); TOMBERGER, Christoph, 80469 München (DE); RASEL, Thomas, 85635 Höhenkirchen-Siegertsbrunn (DE); WACH, Jörg-Johannes, 81247 München (DE); PFAHLER, Patrick, 83075 Bad Feilnbach (DE)
(86) Internationale Anmeldenummer: PCT/EP2017/059773
(87) Internationale Veröffentlichungsnummer: WO 2017/186707

(56) Entgegenhaltungen:
- EP-A1- 2 147 840
- WO-A2-2013/034691
- JP-A- H 115 533

## Beschreibung

Die Erfindung betrifft ein Verfahren zur Optimierung der Kraftschlussausnutzung zwischen Rad und Schiene sowie eine Vorrichtung zur Optimierung der Kraftschlussausnutzung zwischen Rad und Schiene.

Herkömmliche Traktions- und Bremsregelungen arbeiten üblicherweise nach fest vorgegebenen Regeln, um den Kraftschluss zwischen Rad und Schiene zu optimieren, wenn dieser während des Beschleunigungs- oder Bremsvorganges nicht ausreichend ist. Es findet üblicherweise keine Berücksichtigung der tatsächlichen Verhältnisse im Kontaktbereich zwischen Rad und Schiene durch bestehende Traktions- und Bremsregelungen statt.

Die herkömmlichen Brems- und Traktionsregelungen sind nicht in der Lage, vor Eintritt eines Brems- oder Traktionsereignisses den Zustand der Adhäsion zwischen Rad und Schiene zu erfassen. Sie können daher in der Regel auf zu geringe Kraftschlüsse nur reagieren und diese nicht aktiv vermeiden. Darüber hinaus verwenden sie üblicherweise relativ einfache Strategien zur Erhöhung des Kraftschlusses im Fall zu geringer Adhäsion. Diese Strategien, wie das Einbringen von definiertem Schlupf, führen zu hohem Verschleiß von Rad und Schiene.

Der zwischen Rad und Schiene vorhandene, maximal nutzbare Kraftschluss unterliegt starken örtlichen und zeitlichen Schwankungen. Der maximal nutzbare Kraftschluss kann sich innerhalb von wenigen Zentimetern um Größenordnungen ändern, beispielsweise bei der Einfahrt oder der Ausfahrt aus einem Tunnel, bei Störschichten wie Laub auf der Schiene, etc. Dies führt im Betrieb zu Eingriffen von Gleit- und Schleuderschutz im Brems- und Traktionsvorgang. Um ein Schienenfahrzeug optimal antreiben oder abbremsen zu können, ist es daher notwendig, die Brems- und Antriebskräfte dem maximal nutzbaren Kraftschluss zwischen Rad und Schiene anpassen zu können, um die Sicherheit des Schienenverkehrs sicherzustellen und Verschleiß soweit wie möglich zu reduzieren.

Patentdokument WO 2013/034691 A1 offenbart eine Bremssteuervorrichtung für Schienenfahrzeuge, wobei die Vorrichtung eine Reibungsbremseinrichtung umfasst und dazu bestimmt ist, einen tatsächlichen Haftungskoeffizienten zwischen einem Rad des Schienenfahrzeugs und einer Schiene zu bestimmen, die mit dem Rad in Kontakt steht. Patentdokument EP 2 147 840 A1 offenbart ein Verfahren zum Verhindern des Blockierens der Räder eines Schienenfahrzeugs bei ungünstigen Haftungsbedingungen innerhalb eines Rad-Schiene-Kontakts. Durch eine zeitverzögerte Aktivierung eines Stellglieds eines Antiblockierreglers wird eine erhöhte relative Rutschprobe um einen bestimmten Prozentsatz vorgegeben, in der die tatsächlichen dominanten Haftungsbedingungen bestimmt werden.

Patentdokument JP H11 5533 A offenbart eine Vorrichtung und ein Verfahrens, die die auf ein Rad eines Schienenfahrzeugs oder dergleichen wirkende Bremskraft genau steuern können. Die Vorrichtung weist einen Bremsreaktionskraftdetektor auf, der eine Bremskraft erfasst, die in einer Bremsrichtung in umgekehrter Richtung zu einer tangentialen Richtung von einem Rad aufgenommen wird, wobei eine Reibungskraft in tangentialer Richtung zu einer Raddrehrichtung in einer Druckposition erzeugt wird.

Es ist daher die Aufgabe der vorliegenden Erfindung, ein Verfahren sowie eine Vorrichtung bereitzustellen, durch die die tatsächlichen Verhältnisse im Kontaktbereich zwischen Rad und Schiene ermittelt werden können und bei der Optimierung der Kraftschlussausnutzung zwischen Rad und Schiene berücksichtigt werden können. Diese Aufgabe wird durch ein Verfahren zur Optimierung der Kraftschlussausnutzung zwischen Rad und Schiene mit den Verfahrensschritten des Anspruchs 1 sowie durch eine Vorrichtung zur Optimierung der Kraftschlussausnutzung zwischen Rad und Schiene mit den Merkmalen des Anspruchs 12 gelöst. Weitere Merkmale der Erfindung ergeben sich aus den Unteransprüchen.

Im erfindungsgemäßen Verfahren zur Optimierung der Kraftschlussausnutzung zwischen Rad und Schiene werden Messwerte von Größen eingelesen, die mit einer Sensorik eines Schienenfahrzeugs gemessen werden können. Aus den Messwerten werden Modellwerte für weitere Größen mittels eines Modells bestimmt. Aus den Messwerten und den mittels des Modells bestimmten Modellwerten wird ein Zustand zwischen Rad und Schiene ermittelt. Die zwischen Rad und Schiene wirkenden Brems- und Antriebskräfte werden unter Berücksichtigung des ermittelten Zustands zwischen Rad und Schiene geregelt.

Die beim erfindungsgemäßen Verfahren eingelesenen Messwerte werden durch die an Bord eines Schienenfahrzeugs vorhandene Sensorik erfasst. Dabei handelt es sich vorzugsweise um die Sensorik des Schienenfahrzeugs, mit der ein Schienenfahrzeug für den normalen Fahrbetrieb ausgestattet ist, d.h. die serienmäßige Sensorausstattung des Schienenfahrzeugs. Messwerte spezieller Sensoren, die nicht zur serienmäßigen Ausstattung des Schienenfahrzeugs gehören, und die beispielsweise optisch die Schienenoberfläche bzw. den Kontaktbereich zwischen Rad und Schiene überwachen oder die bestehende Luftfeuchtigkeit messen können, können im Rahmen der Erfindung wahlweise zusätzlich eingesetzt werden.

Die Werte weiterer Größen, die für das Ermitteln des Zustands zwischen Rad und Schiene benötigt werden, die jedoch nicht durch die vorhandene Sensorik des Schienenfahrzeugs gemessen werden, werden aus den Messwerten der gemessenen Größen mittels eines Modells als Modellwerte bestimmt. Das Modell stellt damit die Zusammenhänge zwischen den nicht gemessenen, jedoch für die Ermittlung des Zustands zwischen Rad und Schiene benötigten Größen und den mittels der vorhandenen Sensorik gemessenen Größen dar.

Der Zustand zwischen Rad und Schiene wird im anschließenden Schritt aus den mittels der vorhandenen Sensorik des Schienenfahrzeugs gemessenen Messwerten und den aus den Messwerten mittels des Modells bestimmten Modellwerten der weiteren, nicht gemessenen Größen ermittelt. In diesem Schritt werden eine oder mehrere generische Parameter bestimmt, welche repräsentativ für den aktuellen Zustand von Rad und Schiene hinsichtlich der vorhandenen Adhäsion und/oder der Verbesserbarkeit dieser Adhäsion sind.

Der ermittelte Zustand zwischen Rad und Schiene wird anschließend an eine Regelung übergeben, die die zwischen Rad und Schiene wirkende Brems- oder Antriebskraft regelt. Diese berücksichtigt damit den Zustand zwischen Rad und Schiene, insbesondere die zwischen Rad und Schiene momentan maximal übertragbaren Kräfte, und regelt das Antriebs- oder Bremsmoment derart, dass die zwischen Rad und Schiene momentan übertragbaren Kräfte nicht oder nur in einem vorgegebenen Maß überschritten werden und/oder ein gewünschter Schlupf erzielt wird.

Durch das erfindungsgemäße Verfahren können die zwischen Rad und Schiene übertragenen Brems- oder Antriebskräfte an die jeweils herrschenden Verhältnisse, d.h. an den ermittelten Zustand zwischen Rad und Schiene angepasst werden. Dadurch können die maximal möglichen Brems- oder Antriebskräfte übertragen werden, was zu einer Optimierung der Kraftschlussausnutzung führt und dadurch die Bremsanforderung oder Beschleunigungsanforderung optimiert umsetzt. Gleichzeitig können die Kräfte so angepasst werden, dass es zu keinem oder nur in erwünschter Höhe auftretenden Antriebsschlupf oder Gleiten kommt, so dass der Verschleiß zwischen Rad und Schiene in einem gewünschten Maß begrenzt oder minimiert wird.

Für die zustandsbasierte Regelung wird mit dem erfindungsgemäßen Verfahren nur mit der serienmäßig vorhandenen und für den Fahrbetrieb benötigten Sensorik gemessen. Schwer oder nicht messbare Größen, welche für die Brems- und Traktionsregelung relevant sind, können durch einfach messbare Größen und ein Modell ersetzt werden. Die Traktions- bzw. Bremssteuerung ist somit in der Lage, anhand einfach messbarer Größen zum Beispiel den maximal verfügbaren Kraftschluss zwischen Rad und Schiene zu ermitteln und somit die Brems- oder Antriebskräfte optimal im Schienenfahrzeug zu verteilen oder beispielsweise optimale Regelstrategien für den Rad-Schiene-Kontakt bereitzustellen, um den zu geringen Kraftschluss zu verbessern. Dabei kann auch der stark örtlichen und zeitlichen Schwankungen unterliegende maximal nutzbare Kraftschluss zwischen Rad und Schiene berücksichtigt werden.

In einer vorteilhaften Ausgestaltung des Verfahrens sind die eingelesenen Messwerte der durch die Sensorik des Schienenfahrzeugs gemessenen Messgrößen die Messwerte einer oder mehrerer Größen eines Lastdrucks, eines Bremszylinderdrucks, einer Raddrehzahl, der Fahrzeuggeschwindigkeit, der Fahrzeugbeschleunigung bzw. der Fahrzeugverzögerung und der Luftfeuchtigkeit. Dies bedeutet, dass von den genannten Größen alle Größen oder eine Auswahl dieser Größen verwendet werden können, und dass diese Größen auch mehrfach erfasst werden können, beispielsweise indem mehrere Raddrehzahlen gemessen werden

Im Fahrzeug werden damit als Größen vorzugsweise wenigstens ein Lastdruck, wenigstens ein Bremszylinderdruck, wenigstens eine Raddrehzahl, die Fahrzeuggeschwindigkeit, die Fahrzeugbeschleunigung bzw. die Fahrzeugverzögerung sowie die Luftfeuchtigkeit gemessen. Dabei können eine oder mehrere dieser Größen gemessen werden, oder die einzelnen Größen auch mehrfach. Diese Größen werden mit der vorhandenen Sensorik des Fahrzeugs gemessen. Aus den Messwerten dieser Größen oder einer Untermenge dieser Größen können mittels des Modells die Werte weiterer Größen als Modellwerte bestimmt werden, die zusammen mit den gemessenen Größen erforderlich sind, um den Zustand zwischen Rad und Schiene zu bestimmen, der der Regelung der zwischen Rad und Schiene wirkenden Brems- oder Antriebskraft zugrunde liegt. Dabei können diese Größen an einer oder an mehreren Stellen gemessen werden. Beispielsweise können Lastdrücke für verschiedene Wagen eines Zuges ermittelt werden. Als Lastdruck kann beispielsweise der Luftdruck in den Federbälgen der Sekundärfederung zwischen Drehgestell und Wagenkasten gemessen werden.

In einer weiteren Ausgestaltung des Verfahrens werden die Modellwerte für die weiteren Größen mittels des Modells aus den Messwerten einer oder mehrerer Größen des Lastdrucks, des Bremszylinderdrucks, der Raddrehzahl, der Fahrzeuggeschwindigkeit, der Fahrzeugbeschleunigung bzw. der Fahrzeugverzögerung und der Luftfeuchtigkeit bestimmt. Das Modell bildet dabei die Zusammenhänge zwischen den genannten gemessenen Größen und den weiteren Größen, die nicht gemessen werden, jedoch für die Bestimmung des Zustands zwischen Rad und Schiene benötigt werden, ab. Die vorgenannten gemessenen Größen sind dabei hinreichend, um die weiteren Größen, die zur Bestimmung des Zustands zwischen Rad und Schiene benötigt werden, über ein Modell zu ermitteln. Es können mehrere oder alle der genannten Größen herangezogen werden, um die Modellwerte zu ermitteln.

In einer weiteren vorteilhaften Ausgestaltung des Verfahrens wird der Ort, an dem sich das Schienenfahrzeug befindet, bestimmt, und die Modellwerte für die weiteren Größen, die mittels des Modells aus den Messwerten bestimmt werden, und die zusammen mit den Messwerten für die Bestimmung des Zustandes zwischen Rad und Schiene benötigt werden, werden unter zusätzlicher Berücksichtigung des Ortes ermittelt. Der maximal nutzbare Kraftschluss zwischen Rad und Schiene kann stark von örtlichen Gegebenheiten abhängen. Beispielsweise kann er sich bei der Einfahrt oder der Ausfahrt in oder aus einem Tunnel sehr schnell ändern. Durch die Berücksichtigung des Ortes kann daher der Zustand zwischen Rad und Schiene mit höherer Genauigkeit ermittelt werden, damit eine Verbesserung der Regelung der zwischen Rad und Schiene wirkenden Brems- oder Antriebskraft erzielt werden.

In einer weiteren vorteilhaften Ausgestaltung des erfindungsgemäßen Verfahrens werden zusätzlich zu den mit der Sensorik des Schienenfahrzeugs messbaren Größen weitere, durch fahrzeugexterne Messvorrichtungen messbare Größen eingelesen und die Modellwerte werden unter zusätzliche Berücksichtigung der externen Messwerte bestimmt. Alternativ ist es auch möglich, die Modellwerte unter ausschließlicher Verwendung der externen Messwerte ohne Verwendung der mit der Fahrzeugsensorik gemessenen Messwerte zu bestimmen. Dabei kann es sich auch um von anderen Fahrzeugen gemessene Daten handeln.

In einer weiteren vorteilhaften Ausgestaltung des erfindungsgemäßen Verfahrens sind die externen Messwerte der durch die fahrzeugexternen Messvorrichtungen messbaren Größen ausgewählt aus Messwerten eines lokalen Kraftschlusses, eines lokalen Verschmutzungsgrades, eines lokalen Schienenzustands, lokaler Witterungsbedingungen, lokaler Temperaturen und lokaler Schienenrauheiten. Auch die zur Verfügung stehende Adhäsion kann gemessen werden. Dabei können eine oder mehrere der genannten Größen eingelesen und zur Bestimmung der Modellwerte verwendet werden.

In einer weiteren Ausgestaltung des Verfahrens werden mittels des Modells eine oder mehrere Größen der Rauigkeit bzw. des Reibungskoeffizienten zwischen Rad und Schiene, der Temperatur zwischen Rad und Schiene, des Vorhandenseins einer Zwischenschicht zwischen Rad und Schiene und der Normalkraft zwischen Rad und Schiene bestimmt. Diese Größen werden mittels des Modells aus den im Fahrzeug gemessenen Messwerten ermittelt und müssen daher nicht durch eine separate Sensorik gemessen werden. Dabei können sämtliche dieser Größen, oder nur einzelne der genannten Größen mittels des Modells ermittelt werden. Diese mittels des Modells aus den Messwerten bestimmten Modellwerte der weiteren Größen werden benötigt, um in Verbindung mit den gemessenen Größen den Zustand zwischen Rad und Schiene bestimmen zu können.

Erfindungsgemäß wird mittels des Modells die Verschleißrate zwischen Rad und Schiene bestimmt. Die Verschleißrate wird damit aus den vorstehend genannten Messwerten der gemessenen Größen mittels des Modells bestimmt. Die Verschleißrate hat ebenfalls einen Einfluss auf die zwischen Rad und Schiene übertragbaren Kräfte. Sie kann deshalb bei der Bestimmung des Zustandes zwischen Rad und Schiene ebenfalls berücksichtigt werden, um den Zustand zwischen Rad und Schiene mit erhöhter Genauigkeit zu ermitteln. Dafür ist das Modell zur Bestimmung der Modellwerte der weiteren Größen aus den Messwerten der gemessenen Größen so zu erweitern, dass mittels des Modells auch die Verschleißrate zwischen Rad und Schiene aus den Messwerten der gemessenen Größen ermittelt werden kann.

In einer besonders vorteilhaften Ausgestaltung des Verfahrens wird als Zustand zwischen Rad und Schiene die im Kontakt zwischen Rad und Schiene übertragbare Kraft ermittelt. Die zwischen Rad und Schiene übertragbare Kraft ist die Kraft, die bei Beschleunigungsvorgängen zum Beschleunigen des Fahrzeugs und bei Verzögerungsvorgängen zum Abbremsen des Fahrzeugs genutzt werden kann. Die im Kontakt zwischen Rad und Schiene übertragbare Kraft ist damit die wesentliche, den Zustand zwischen Rad und Schiene kennzeichnende Größe und kann unmittelbar als Eingangsgröße für einen Algorithmus zur Regelung der zwischen Rad und Schiene wirkenden Brems- oder Antriebskraft genutzt werden.

In einer weiteren besonders vorteilhaften Ausgestaltung des Verfahrens wird beim Regeln der zwischen Rad und Schiene wirkenden Brems- oder Antriebskraft der Schlupf zwischen Rad und Schiene geregelt. Der Schlupf wird so geregelt, dass der der Regelung vorgegebene Sollschlupf einen optimalen Kompromiss zwischen Verschleiß und Längskraft darstellt. Die Vorgabe des Sollschlupfs und damit die Regelung des Schlupfs kann auch abhängig von den jeweiligen Bremsanforderungen variiert werden. Beispielsweise kann bei einer Notbremsanforderung der Schlupf so eingeregelt werden, dass die zwischen Rad und Schiene übertragbare Bremskraft optimiert wird und ein erhöhter Verschleiß in Kauf genommen wird. In anderen Fahrsituationen kann der Rad-Sollschlupf hingegen so vorgegeben werden, dass ein verschleißoptimaler Betrieb erzielt wird.

In einer weiteren Ausgestaltung des Verfahrens werden die Modellwerte für die weiteren Größen aus den Messwerten mittels eines Kennfeldmodells und/oder mittels eines künstlichen neuronalen Netzes bestimmt. Das Modell zur Ermittlung von Modellwerten der weiteren Größen aus den Messwerten, die neben den Messwerten zur Bestimmung des Zustands zwischen Rad und Schiene benötigt werden, besteht damit aus einem Kennfeld und/oder aus einem künstlichen neuronalen Netz. Das Kennfeld oder das künstliche neuronale Netz bildet dabei den Zusammenhang der nicht-messbaren oder nicht gemessenen Größen zu den mittels der Sensorik des Schienenfahrzeugs gemessenen Größen ab. Ein künstliches neuronales Netz kann mit Werten trainiert werden, die den Zusammenhang zwischen den mit der Sensorik des Schienenfahrzeugs gemessenen Größen und den nicht gemessenen, mit dem Modell zu bestimmenden Größen repräsentieren.

In einer weiteren Ausgestaltung des Verfahrens wird auch der Zustand zwischen Rad und Schiene aus den Messwerten sowie den mittels des Modells bestimmten Modellwerten mittels eines Kennfeldmodells und/oder eines künstlichen neuronalen Netzes bestimmt. Ein Kennfeldmodell oder ein künstliches neuronales Netzes wird also sowohl zur Bestimmung der Modellwerte aus den Messwerten als auch zur Bestimmung des Zustands zwischen Rad und Schiene, beispielsweise zur Bestimmung der im Kontakt zwischen Rad und Schiene momentan übertragbaren Kraft aus den Messwerten sowie den durch das Modell zur Bestimmung der weiteren Größen ermittelten Modellwerten verwendet. Dabei kann es sich um ein einziges Kennfeldmodell oder künstliches neuronales Netz oder um separate Kennfeldmodelle oder künstliche neuronale Netze handeln als auch um eine Kombination dieser Modellarten. Bei diesem Modell handelt es sich somit um einen Beobachter, welcher die wesentlichen Kraftschlüsse enthält und einen oder mehrere generische Parameter, welche repräsentativ für den aktuellen Zustand von Rad und Schiene hinsichtlich der vorhandenen Adhäsion und/oder Verbesserbarkeit dieser Adhäsion stehen, aus den Messwerten und den weiteren, aus den Messwerten über ein Modell ermittelten Modellwerten bestimmt.

Eine erfindungsgemäße Vorrichtung zur Optimierung der Kraftschlussausnutzung zwischen Rad und Schiene weist einen Eingang zum Einlesen von Messwerten für Messgrößen, die mit einer Sensorik eines Schienenfahrzeugs messbar sind, ein Modell, mittels dessen Modellwerte für weitere Größen aus den Messwerten bestimmbar sind, eine erste Einrichtung, mittels der der Zustand zwischen Rad und Schiene aus den Messwerten und den mittels des Modells bestimmten Modellwerten ermittelbar ist, sowie eine zweite Einrichtung, mittels der eine zwischen Rad und Schiene wirkende Brems- oder Antriebskraft unter Berücksichtigung des ermittelten Zustands zwischen Rad und Schiene regelbar ist, auf.

Die Vorrichtung liest somit zunächst Messwerte von Messgrößen ein, die mittels der im Schienenfahrzeug vorhandenen Sensorik messbar sind. Dabei handelt es sich, wie bereits vorstehend ausgeführt, um eine Sensorik, die im Fahrzeug üblicherweise vorhanden ist, um den normalen Fahrzeugbetrieb zu ermöglichen. Eine spezielle Sensorik ist für die erfindungsgemäße Vorrichtung nicht zwingend erforderlich.

Die Größen, die nicht mit Sensoren gemessen werden, aber für die Bestimmung des Zustands zwischen Rad und Schiene benötigt werden, können mittels eines Modells als Modellwerte aus den Messwerten bestimmt werden.

Die Vorrichtung weist eine erste Einrichtung auf, mittels der der Zustand zwischen Rad und Schiene aus den Messwerten und den mittels des Modells bestimmten Modellwerten ermittelbar ist. Bei dieser ersten Einrichtung kann es sich ebenfalls um ein (zweites) Modell handeln, mittels dessen Aussagen über den Zustand zwischen Rad und Schiene, beispielsweise die über zwischen Rad und Schiene übertragbaren Kräfte, aus den gemessenen Werten und den über das (erste) Modell aus den gemessenen Werten ermittelten Modellwerten getroffen werden können. Diese erste Einrichtung erfordert somit neben den mit der vorhandenen Sensorik des Fahrzeugs gemessenen Größen die weiteren Größen, die durch das Modell aus den Messgrößen bestimmbar sind.

Die zweite Einrichtung, mittels der eine zwischen Rad und Schiene wirkende Brems- oder Antriebskraft unter Berücksichtigung des ermittelten Zustands zwischen Rad und Schiene regelbar ist, umfasst einen Regelungsalgorithmus, der abhängig von beispielsweise Brems- oder Beschleunigungsanforderungen, dem ermittelten Zustand zwischen Rad und Schiene sowie ggf. unter Berücksichtigung weiterer Größen, beispielsweise eines Sollschlupfs, die Brems- bzw. Antriebskraft des Fahrzeugs regelt. Dabei kann die Brems- oder Antriebskraft so geregelt werden, dass ein optimaler Kompromiss zwischen Verschleiß und Brems- oder Antriebskraft erzielt wird, oder dass in bestimmten Situationen, zu Lasten des Verschleißes, eine optimale Beschleunigung erzielt wird.

In einer weiteren vorteilhaften Ausgestaltung der Vorrichtung ist das in der Vorrichtung enthaltene Modell, mittels dessen Modellwerte für weitere Größen aus den Messwerten bestimmbar sind, so gestaltet, dass mittels des Modells eine oder mehrere Größen der Rauigkeit bzw. des Reibungskoeffizienten zwischen Rad und Schiene, der Temperatur zwischen Rad und Schiene, einer Zwischenschicht zwischen Rad und Schiene und der Normalkraft zwischen Rad und Schiene aus den Messwerten eines oder mehrerer Größen eines Lastdrucks, eines Bremszylinderdrucks, einer Raddrehzahl, der Fahrzeuggeschwindigkeit, der Fahrzeugbeschleunigung bzw. der Fahrzeugverzögerung und der Luftfeuchtigkeit bestimmbar sind. Von den genannten Messgrößen können somit alle dieser Größen oder eine Auswahl dieser Größen zur Bestimmung der Modellwerte verwendet werden, diese Messgrößen können auch mehrfach erfasst werden, beispielsweise indem mehrere Raddrehzahlen gemessen werden, und es können eine oder mehrere der genannten, mittels des Modells bestimmbaren Größen durch das Modell bestimmt werden.

Das Modell ist damit so gestaltet, dass die Modellwerte der weiteren, nicht gemessenen Größen, die zum Bestimmen des Zustandes zwischen Rad und Schiene benötigt werden, aus den im Fahrzeug verfügbaren, vorstehend genannten Messwerten ermittelt werden können. Dadurch kann auf spezielle Sensorik, die benötigt werden würde, um diese Größen zu ermitteln, verzichtet werden.

In einer weiteren vorteilhaften Ausgestaltung weist die Vorrichtung ferner einen Eingang zum Einlesen von externen Messwerten für Messgrößen, die mit fahrzeugexternen Messvorrichtungen messbar sind, auf. Das Modell ist dabei so gestaltet, dass die Modellwerte (12) für die weiteren Größen unter zusätzlicher Berücksichtigung der externen Messwerte bestimmbar sind und die erste Einrichtung ist so gestaltet, dass der Zustand zwischen Rad und Schiene unter zusätzlicher Berücksichtigung der externen Messwerte ermittelbar ist. Dabei kann es sich auch um von anderen Fahrzeugen gemessene Daten handeln.

In einer weiteren vorteilhaften Ausgestaltung sind als externe Messwerte Messwerte eines lokalen Kraftschlusses, eines lokalen Verschmutzungsgrades, eines lokalen Schienenzustands, lokaler Witterungsbedingungen, lokaler Temperaturen und/oder lokaler Schienenrauheiten einlesbar. Dabei können eine oder mehrere der genannten Größen eingelesen und zur Bestimmung der Modellwerte verwendet werden.

In einer besonders vorteilhaften Ausgestaltung ist die erste Einrichtung, mittels der der Zustand zwischen Rad und Schiene aus den Messwerten und den mittels des Modells bestimmbaren Modellwerten ermittelbar ist, so gestaltet, dass durch die erste Einrichtung die im Kontakt zwischen Rad und Schiene übertragbare Kraft ermittelbar ist. Die zwischen Rad und Schiene übertragbare Kraft ist die wesentliche Größe zur Kennzeichnung des Zustandes zwischen Rad und Schiene und stellt damit auch eine wesentliche Größe für eine zustandsbasierte Regelungsstrategie zur Regelung der zwischen Rad und Schiene wirkenden Brems- oder Antriebskraft dar.

In einer weiteren vorteilhaften Ausgestaltung der Vorrichtung weist das Modell, mittels dessen die Modellwerte für die weiteren Größen aus den Messwerten bestimmbar sind, ein Kennfeld und/oder ein künstliches neuronales Netz auf. Mit diesem ist es möglich, die Modellwerte der weiteren, nicht gemessenen Größen aus den Messwerten der im Fahrzeug gemessenen Größen zu bestimmen.

In einer weiteren vorteilhaften Ausgestaltung der Vorrichtung weist auch die erste Einrichtung, mittels der der Zustand zwischen Rad und Schiene aus den Messwerten und den mittels des Modells bestimmbaren Modellwerten ermittelbar ist, ein Kennfeld oder ein künstliches neuronales Netz auf. Dadurch kann beispielsweise die in Kontakt zwischen Rad und Schiene übertragbare Kraft aus den gemessenen Größen und den mittels des Modells bestimmbaren Größen durch ein künstliches neuronales Netz oder ein Kennfeld bestimmt werden.

Ausführungsbeispiele der Erfindung werden nachfolgend anhand der beigefügten Zeichnungen beschrieben.

Es zeigen:
- Fig. 1: den allgemeinen Ablauf eines erfindungsgemäßen Verfahrens zur Optimierung der Kraftschlussausnutzung zwischen Rad und Schiene,
- Fig. 2: ein erfindungsgemäßes Verfahren und die dabei verwendeten Größen.
- Fig. 3: ein erfindungsgemäßes Verfahren, bei dem zusätzlich externe Messwerte zur Bestimmung der Modellwerte verwendet werden.

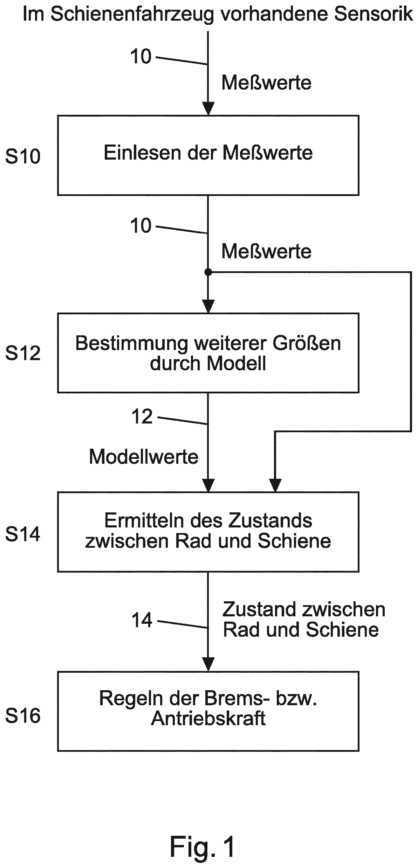

**Fig. 1** stellt das Vorgehen beim erfindungsgemäßen Verfahren zur Optimierung der Kraftschlussausnutzung zwischen Rad und Schiene allgemein dar. Im Schritt S10 werden Messwerte 10, die durch die im Schienenfahrzeug vorhandene Sensorik erfasst werden, eingelesen. Es können aber auch Messwerte eingelesen werden, die durch fahrzeugexterne Messvorrichtungen erfasst werden. Alternativ können auch ausschließlich Messwerte verwendet werden, die durch fahrzeugexterne Messvorrichtungen erfasst werden. Die externen Messwerte können beispielsweise durch Funkkommunikation an die in einem Schienenfahrzeug befindliche Auswerteeinheit übertragen werden. Alternativ ist es auch möglich, die Auswertungen in einer außerhalb des Schienenfahrzeugs befindlichen Auswertungseinheit durchzuführen und den dabei ermittelten Zustand zwischen Rad und Schiene an das Schienenfahrzeug zu übertragen, so dass das Schienenfahrzeug diese Informationen zur Regelung der Brems- bzw. Antriebskräfte heranziehen kann.

Die Messwerte 10 werden dann einem Modell zugeführt, das im Schritt S12 aus den Messwerten 10 Modellwerte 12 weiterer Größen bestimmt, die zum Ermitteln des Zustands 14 zwischen Rad und Schiene benötigt werden. Das Modell bildet dabei die Zusammenhänge zwischen den genannten gemessenen Größen und den weiteren Größen, die nicht gemessen werden, jedoch für die Bestimmung des Zustands zwischen Rad und Schiene benötigt werden, ab. Die nicht gemessenen, aber zur Ermittlung des Zustands 14 zwischen Rad und Schiene benötigten Modellwerte 12 werden damit aus den Messwerten 10 beispielsweise mittels eines Beobachtermodells bestimmt. Die Modellwerte 12 können beispielsweise mittels eines Kennfeldmodells oder eines künstlichen neuronalen Netzes aus den Messwerten 10 ermittelt werden. Auch eine Verbindung von Kennfeldern mit künstlichen neuronalen Netzen kann zur Bestimmung der Modellwerte 12 verwendet werden.

Die durch das Modell ermittelten Modellwerte 12 werden zusammen mit den Messwerten 10 verwendet, um im Schritt S14 aus den Modellwerten 12 und den Messwerten 10 den Zustand 14 zwischen Rad und Schiene zu ermitteln. Der Zustand 14 zwischen Rad und Schiene kann aus den Messwerten 10, bei denen es sich wie vorstehend ausgeführt sowohl um im Fahrzeug selbst erfasste Messwerte 10 als auch durch fahrzeugexterne Vorrichtungen erfasste Messwerte handeln kann, und den Modellwerten 12 ermittelt werden. Die Ermittlung des Zustands 14 zwischen Rad und Schiene kann ebenfalls beispielsweise durch Kennfeldmodelle oder durch künstliche neuronale Netze oder durch eine Kombination von beidem erfolgen.

Der im Schritt S14 ermittelte Zustand 14 zwischen Rad und Schiene wird von einer zustandsbasierten Regelung neben anderen Größen, beispielsweise Bremsanforderungen, Beschleunigungsanforderungen und/oder einem vorgegebenen Sollschlupf verwendet, um im Schritt S16 die Brems- bzw. Antriebskraft in Abhängigkeit vom Zustand 14 zwischen Rad und Schiene zu regeln. Dadurch kann die Kraftschlussausnutzung zwischen Rad und Schiene optimiert werden.

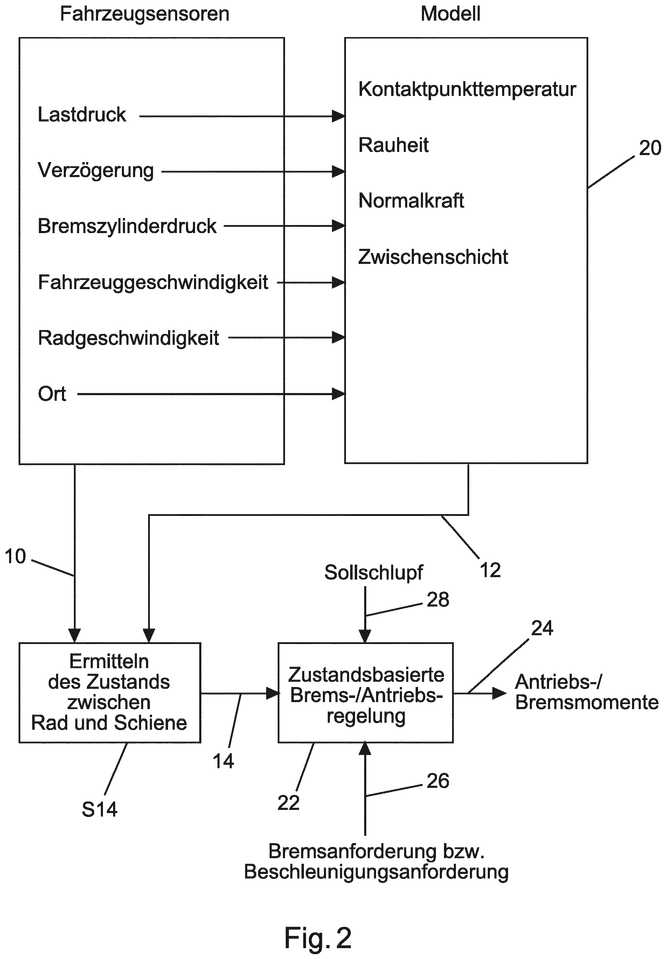

In dem in **Fig. 2** dargestellten beispielhaften Ablauf des Verfahrens werden durch die Fahrzeugsensoren als Messwerte 10 beispielhaft der Lastdruck, d.h. der Luftdruck in den Federbälgen der Sekundärfederung zwischen Drehgestell und Wagenkasten, die Fahrzeugverzögerung, der Druck im Bremszylinder, die momentane Fahrzeuggeschwindigkeit sowie die Radgeschwindigkeit gemessen. Messwerte spezieller Sensoren, die zur Zeit nicht zur serienmäßigen Ausstattung eines Schienenfahrzeugs gehören, und die beispielsweise optisch die Schienenoberfläche bzw. den Kontaktbereich zwischen Rad und Schiene überwachen oder die bestehende Luftfeuchtigkeit messen können, können im Rahmen der Erfindung wahlweise zusätzlich eingesetzt werden. Es können sämtliche der genannten Größen zur Ermittlung der Modellwerte 12 und zur Ermittlung S14 des Zustands 14 zwischen Rad und Schiene verwendet werden. Die Ermittlung von Modellwerten 12 und des Zustands 14 zwischen Rad und Schiene ist jedoch auch mit einer Teilmenge dieser Messgrößen möglich, und es kann auch nur eine Teilmenge der Modellwerte 12 bestimmt werden.

In der in Fig. 2 dargestellten Ausgestaltung des Verfahrens werden somit ausschließlich durch die fahrzeugeigene Sensorik erfasste Messwerte 10 zur Ermittlung der Modellwerte 12 und zur Ermittlung S14 des Zustands zwischen Rad und Schiene verwendet. Dabei können die Messwerte 10 an einer oder an mehreren Stellen gemessen werden. Beispielsweise können Lastdrücke für verschiedene Wagen eines Zuges ermittelt werden. Als Lastdruck kann beispielsweise der Luftdruck in den Federbälgen der Sekundärfederung zwischen Drehgestell und Wagenkasten gemessen werden.

In der in Fig. 2 dargestellten Ausgestaltung des Verfahrens wird des Weiteren auch der aktuelle Ort des Fahrzeugs, beispielsweise ob sich das Fahrzeug gerade in einem Tunnel befindet, bestimmt. Bei der Ausfahrt aus einem Tunnel kann sich der Kraftschluss zwischen Rad und Schiene sehr schnell ändern. Diese örtlichen Abhängigkeiten können durch direkte Berücksichtigung der konkreten örtlichen Verhältnisse bzw. durch Berücksichtigung bekannter bei bestimmten Ortsänderungen auftretender Einflüsse verbessert berücksichtigt werden.

Diese Messwerte 10 werden nach dem Einlesen an ein Modell 20 übergeben. Das Modell 20 ermittelt aus den Messwerten 10 dieser Größen die weiteren, zur Ermittlung des Zustands zwischen Rad und Schiene erforderlichen Größen 12, z.B. in Fig. 2 beispielhaft Kontaktpunkttemperatur, Rauheit, Normalkraft sowie das Vorliegen einer Zwischenschicht zwischen Rad und Schiene. Optional kann, wie in Fig. 2 dargestellt, durch das Modell 20 auch eine Verschleißrate bestimmt werden. Die Verschleißrate hat ebenfalls einen Einfluss auf die zwischen Rad und Schiene übertragbaren Kräfte, so dass ihre Berücksichtigung zu einer erhöhten Genauigkeit der Kraftschlussregelung führt.

Bei dem Modell 20 kann es sich beispielsweise um ein künstliches neuronales Netz, ein Kennfeldmodell oder eine Kombination von beidem handeln. Auch andere Modellansätze, beispielsweise unter Berücksichtigung bekannter physikalischer Zusammenhänge, können verwendet werden.

Aus den Messwerten 10 der Fahrzeugsensorik sowie den durch das Modell 20 ermittelten Modellwerten 12 wird anschließend der Zustand 14 zwischen Rad und Schiene ermittelt (S14 in Fig. 1). Dieser Zustand 14 zwischen Rad und Schiene bildet die Eingangsgröße einer zustandsbasierten Brems- bzw. Antriebsregelung 22.

Als Zustand 14 zwischen Rad und Schiene kann beispielsweise die im Kontakt zwischen Rad und Schiene übertragbare Kraft ermittelt werden. Die zwischen Rad und Schiene übertragbare Kraft ist die Kraft, die bei Beschleunigungsvorgängen zum Beschleunigen des Fahrzeugs und bei Verzögerungsvorgängen zum Abbremsen des Fahrzeugs genutzt werden kann. Die im Kontakt zwischen Rad und Schiene übertragbare Kraft ist damit eine wesentliche, den Zustand 14 zwischen Rad und Schiene kennzeichnende Größe und kann unmittelbar als Eingangsgröße für einen Algorithmus zur Regelung der zwischen Rad und Schiene wirkenden Brems- oder Antriebskraft genutzt werden.

Die zustandsbasierte Brems- bzw. Antriebsregelung 22 regelt das durch eine Bremse bzw. einen Antrieb aufzubringende Drehmoment. Dabei berücksichtigt es neben dem Zustand 14 zwischen Rad und Schiene und weiteren Eingangsgrößen, z.B. einen Sollschlupf 28, insbesondere eine beispielsweise vom Triebfahrzeugführer vorgegebene Bremsanforderung bzw. Beschleunigungsanforderung 26. Die zustandsbasierte Brems- bzw. Antriebsregelung 22 ermittelt ein Drehmoment bzw. Radmoment, das durch die Bremse bzw. den Antrieb unter Berücksichtigung des Rad-Schiene-Zustands 14 sowie der weiteren Vorgaben ausgeübt werden kann. Dabei wird in der in Fig. 2 dargestellten Ausgestaltung des Verfahrens insbesondere ein Sollschlupf 28 berücksichtigt. Die zustandsbasierte Brems- bzw. Antriebsregelung 22 regelt das Antriebs- bzw. Bremsmoment 24 dabei so, dass ein vorgegebener Sollschlupf 28 erzielt wird, bei dem beispielsweise ein optimales Verhältnis zwischen ausgeübtem Antriebs- bzw. Bremsmoment 24 am Rad und dem dabei eintretenden Verschleiß zwischen Rad und Schiene erzielt werden kann. Der Schlupf kann dabei so geregelt werden, dass der der Regelung vorgegebene Sollschlupf 28 einen optimalen Kompromiss zwischen Verschleiß und Längskraft darstellt. Die Vorgabe des Sollschlupfs 28 und damit die Regelung des Schlupfs kann auch abhängig von den jeweiligen Bremsanforderungen variiert werden. Beispielsweise kann bei einer Notbremsanforderung der Schlupf so eingeregelt werden, dass die zwischen Rad und Schiene übertragbare Bremskraft optimiert wird und ein erhöhter Verschleiß in Kauf genommen wird. In anderen Fahrsituationen kann der Rad-Sollschlupf 28 hingegen so vorgegeben werden, dass ein verschleißoptimaler Betrieb erzielt wird.

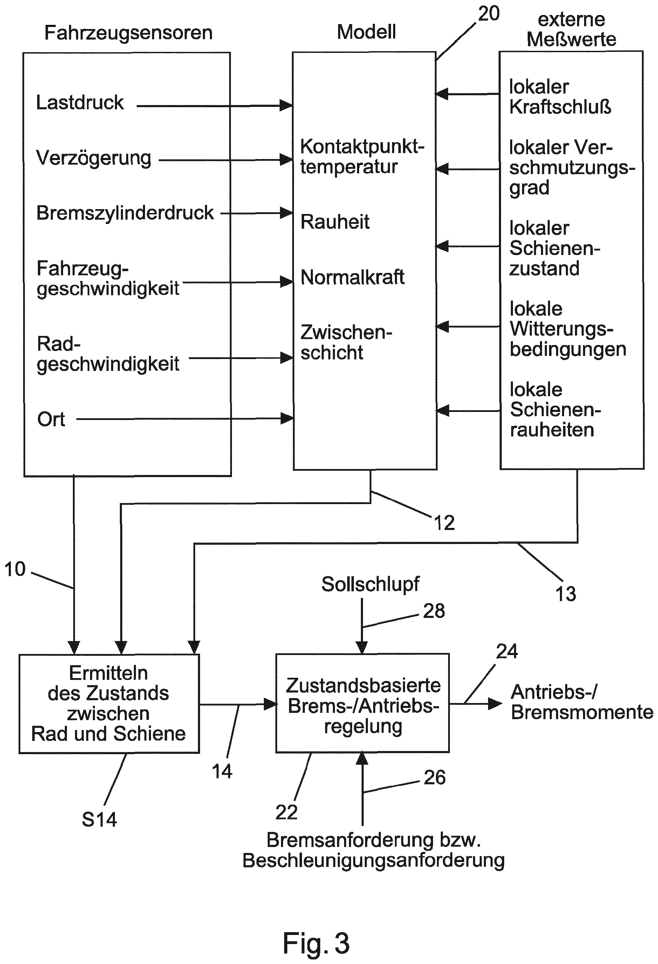

In **Fig. 3** werden zum Bestimmen der Modellwerte 12 sowie zum Ermitteln S14 des Zustands 14 zwischen Rad und Schiene neben den Messwerten 10 der Fahrzeugsensorik zusätzlich auch externe Messwerte 13, die von fahrzeugexternen, d.h. außerhalb des Fahrzeugs angeordneten Messvorrichtungen stammen, verwendet. Beispielhaft werden hier Messwerte eines lokalen Kraftschlusses, eines lokalen Verschmutzungsgrades, eines lokalen Schienenzustands, lokaler Witterungsbedingungen, lokaler Temperaturen und lokaler Schienenrauheiten, die von fahrzeugexternen Messvorrichtungen stammen, herangezogen. Es können jedoch auch eine Untermenge dieser Größen, oder weitere durch externe Messvorrichtungen ermittelte Größen herangezogen werden.

Die externen Messwerte 13 können beispielsweise durch eine Funkverbindung zum Schienenfahrzeug übertragen werden. Es können jedoch einzelne Auswertungsschritte des Verfahrens auch außerhalb des Schienenfahrzeugs durchgeführt werden, und dann bereits vorausgewertete Informationen an das Schienenfahrzeug übertragen werden, so dass eine im Schienenfahrzeug angeordnete Auswertungseinheit eine geringere Speicherkapazität und eine geringere Rechenleistung benötigt.

Auch hier werden als Modellwerte 12 beispielhaft eine Kontaktpunkttemperatur, die Rauheit, die Normalkraft sowie das Vorliegen einer Zwischenschicht zwischen Rad und Schiene durch das Modell 20 aus den Messwerten 10 der Fahrzeugsensoren und den externen Messwerten 13 ermittelt. Auch hier wird durch das Modell 20 zusätzlich eine Verschleißrate bestimmt. Bei dem Modell 20 kann es sich auch hier wie beim Modell in Fig. 2 beispielsweise um ein künstliches neuronales Netz, ein Kennfeldmodell oder eine Kombination von beidem handeln. Auch andere Modellansätze, beispielsweise unter Berücksichtigung bekannter physikalischer Zusammenhänge, können verwendet werden, um unter der zusätzlichen Berücksichtigung fahrzeugexterner Messwerte die Modellwerte 12 zu bestimmen.

Aus den Messwerten 10 der Fahrzeugsensorik, den Messwerten 13 der fahrzeugexternen Messvorrichtungen sowie den durch das Modell 20 ermittelten Modellwerten 12 wird auch hier anschließend der Zustand 14 zwischen Rad und Schiene ermittelt (Schritt S14 in Fig. 1). Der unter zusätzlicher Berücksichtigung der externen Messwerte 13 ermittelte Zustand 14 zwischen Rad und Schiene bildet auch in dem in Fig. 3 dargestellten Ausführungsbeispiel die Eingangsgröße einer zustandsbasierten Brems- bzw. Antriebsregelung 22, die das durch eine Bremse bzw. einen Antrieb aufzubringende Drehmoment regelt, um die Kraftschlussausnutzung zwischen Rad und Schiene zu optimieren. Dabei werden neben dem Zustand 14 zwischen Rad und Schiene sowie weiteren Eingangsgrößen, z.B. einem Sollschlupf 28, eine beispielsweise vom Triebfahrzeugführer vorgegebene Bremsanforderung bzw. Beschleunigungsanforderung 26 berücksichtigt. Die zustandsbasierte Brems- bzw. Antriebsregelung 22 ermittelt dabei ebenso wie in der Ausführung gemäß Fig. 2 ein Drehmoment bzw. Radmoment, das durch die Bremse bzw. den Antrieb unter Berücksichtigung des Rad-Schiene-Zustands 14 sowie der weiteren Vorgaben ausgeübt werden kann.

### BEZUGSZEICHENLISTE

- S10: Einlesen von Messwerten
- S12: Bestimmen von Modellwerten
- S14: Ermitteln des Zustands zwischen Rad und Schiene
- S16: Regeln der Brems- bzw. Antriebskraft
- 10: Messwerte der Fahrzeugsensorik
- 12: Modellwerte
- 13: externe Messwerte
- 14: Zustand zwischen Rad und Schiene
- 20: Modell
- 22: zustandsbasierte Regelung
- 24: Antriebs- bzw. Bremsmoment
- 26: Brems- bzw. Beschleunigungsanforderung
- 28: Sollschlupf

## Patentansprüche

1. Verfahren zur Optimierung der Kraftschlussausnutzung zwischen Rad und Schiene,
umfassend die folgenden Schritte:
Einlesen (S10) von Messwerten (10) für mit einer Sensorik eines Schienenfahrzeugs messbare Größen,
Bestimmen (S12) von Modellwerten (12) für weitere Größen aus den Messwerten (10) mittels eines Modells (20),
Ermitteln (S14) eines Zustands (14) zwischen Rad und Schiene aus den eingelesenen Messwerten (10) und den mittels des Modells (20) bestimmten Modellwerten (12),
Regeln (S16) einer zwischen Rad und Schiene wirkenden Brems- oder Antriebskraft (24) unter Berücksichtigung des ermittelten Zustands (14) zwischen Rad und Schiene,
**dadurch gekennzeichnet, dass** mittels des Modells (20) als Modellwert (12) die Verschleißrate zwischen Rad und Schiene bestimmt wird.

2. Verfahren nach Anspruch 1,
wobei die eingelesenen Messwerte (10) der durch die Sensorik des Schienenfahrzeugs messbaren Größen, ausgewählt sind aus Messwerten eines Lastdrucks und/oder eines Bremszylinderdrucks und/oder einer Raddrehzahl und/oder der Fahrzeuggeschwindigkeit und/oder der Fahrzeugbeschleunigung bzw. -verzögerung und/oder der Luftfeuchtigkeit.

3. Verfahren nach einem der vorangehenden Ansprüche,
wobei die Modellwerte (12) mittels des Modells (20) aus Messwerten (10) eines Lastdrucks und/oder eines Bremszylinderdrucks und/oder einer Raddrehzahl und/oder der Fahrzeuggeschwindigkeit und/oder der Fahrzeugbeschleunigung bzw. -verzögerung und/oder der Luftfeuchtigkeit ermittelt werden.

4. Verfahren nach Anspruch 3,
wobei der Ort, an dem sich das Schienenfahrzeug befindet, bestimmt wird, und die Modellwerte (12) mittels des Modells (20) unter Berücksichtigung des Ortes ermittelt werden.

5. Verfahren nach einem der vorangehenden Ansprüche,
wobei zusätzlich externe Messwerte (13) fahrzeugexterner Messvorrichtungen eingelesen werden und die Modellwerte (12) unter zusätzlicher Berücksichtigung der externen Messwerte (13) bestimmt werden.

6. Verfahren nach Anspruch 5,
wobei die externen Messwerte (13) der durch die fahrzeugexternen Messvorrichtungen messbaren Größen ausgewählt sind aus Messwerten eines lokalen Kraftschlusses und/oder eines lokalen Verschmutzungsgrades und/oder eines lokalen Schienenzustands und/oder lokaler Witterungsbedingungen und/oder lokaler Temperaturen und/oder lokaler Schienenrauheiten.

7. Verfahren nach einem der vorangehenden Ansprüche,
wobei mittels des Modells (20) als Modellwerte (12) die Rauigkeit bzw. der Reibungskoeffizient zwischen Rad und Schiene und/oder die Temperatur im Kontaktpunkt zwischen Rad und Schiene und/oder eine Zwischenschicht zwischen Rad und Schiene und/oder die Normalkraft zwischen Rad und Schiene bestimmt werden.

8. Verfahren nach einem der vorangehenden Ansprüche,
wobei als Zustand (14) zwischen Rad und Schiene die im Kontakt zwischen Rad und Schiene übertragbare Kraft ermittelt wird.

9. Verfahren nach einem der vorangehenden Ansprüche,
wobei beim Regeln (S16) der zwischen Rad und die Schiene wirkenden Brems- oder Antriebskraft (24) der Schlupf (28) zwischen Rad und Schiene geregelt wird.

10. Verfahren nach einem der vorangehenden Ansprüche,
wobei die Modellwerte (12) aus den Messwerten (10) mittels eines Kennfeldmodells und/oder eines künstlichen neuronalen Netzes bestimmt werden.

11. Verfahren nach einem der vorangehenden Ansprüche,
wobei der Zustand (14) zwischen Rad und Schiene aus den Messwerten (10) und den Modellwerten (12) mittels eines Kennfeldmodells und/oder eines künstlichen neuronalen Netzes bestimmt wird.

12. Vorrichtung zur Optimierung der Kraftschlussausnutzung zwischen Rad und Schiene, wobei die Vorrichtung aufweist:
einen Eingang zum Einlesen von Messwerten (10) für Messgrößen, die mit einer Sensorik eines Schienenfahrzeugs messbar sind,
ein Modell, mittels dessen Modellwerte (12) für weitere Größen aus den Messwerten (10) bestimmbar sind,
eine erste Einrichtung, mittels der ein Zustand (14) zwischen Rad und Schiene aus den Messwerten (10) und den mittels des Modells (20) bestimmten Modellwerten (12) ermittelbar ist,
eine zweite Einrichtung, mittels der eine zwischen Rad und Schiene wirkende Brems- oder Antriebskraft (24) unter Berücksichtigung des ermittelten Zustands (14) zwischen Rad und Schiene regelbar ist, **dadurch gekennzeichnet, dass** mittels des Modells (20) als Modellwert (12) die Verschleißrate zwischen Rad und Schiene bestimmt wird.

13. Vorrichtung nach Anspruch 12,
wobei das Modell (20) so gestaltet ist, dass mittels des Modells (20) die Rauigkeit bzw. der Reibungskoeffizient zwischen Rad und Schiene und/oder die Temperatur zwischen Rad und Schiene und/oder eine Zwischenschicht zwischen Rad und Schiene und/oder die Normalkraft zwischen Rad und Schiene aus Messwerten eines Lastdrucks und/oder eines Bremszylinderdrucks und/oder einer Raddrehzahl und/oder der Fahrzeuggeschwindigkeit und/oder der Fahrzeugbeschleunigung bzw. -verzögerung und/oder der Luftfeuchtigkeit bestimmbar sind.

14. Vorrichtung nach Anspruch 12 oder 13,
wobei die Vorrichtung ferner einen Eingang zum Einlesen von externen Messwerten (13) für Messgrößen, die mit fahrzeugexternen Messvorrichtungen messbar sind, aufweist, das Modell so gestaltet ist, dass die Modellwerte (12) für die weiteren Größen unter zusätzlicher Berücksichtigung der externen Messwerte (13) bestimmbar sind und die erste Einrichtung so gestaltet ist, dass der Zustand zwischen Rad und Schiene unter zusätzlicher Berücksichtigung der externen Messwerte (13) ermittelbar ist.

15. Vorrichtung nach Anspruch 14,
wobei als externe Messwerte (13) Messwerte eines lokalen Kraftschlusses und/oder eines lokalen Verschmutzungsgrades und/oder eines lokalen Schienenzustands und/oder lokaler Witterungsbedingungen und/oder lokaler Temperaturen und/oder lokaler Schienenrauheiten einlesbar sind.

16. Vorrichtung nach einem der Ansprüche 12 bis 15,
wobei die erste Einrichtung so gestaltet ist, dass die im Kontakt zwischen Rad und Schiene übertragbare Kraft ermittelbar ist.

17. Vorrichtung nach einem der Ansprüche 12 bis 16,
wobei das Modell (20), mittels dessen die Modellwerte (12) aus den Messwerten (10) bestimmbar sind, ein Kennfeld und/oder ein künstliches neuronales Netz aufweist.

18. Vorrichtung nach einem der Ansprüche 12 bis 17, wobei die erste Einrichtung, mittels der der Zustand (14) zwischen Rad und Schiene aus den Messwerten (10) und den mittels des Modells (20) bestimmten Modellwerten (12) ermittelbar ist, ein Kennfeld und/oder ein künstliches neuronales Netz aufweist.

## Claims

1. Method for optimising the frictional locking between wheel and rail,
comprising the following steps:
the reading-in (S10) of measured values (10) for variables that can be measured with a sensor system of a rail vehicle,
the determination (S12) of model values (12) for further variables from the measured values (10) by means of a model (20),
the determination (S14) of a condition (14) between wheel and rail from the read-in measured values (10) and the model values (12) determined by means of the model (20),
the control (S16) of a braking or driving force (24) acting between wheel and rail, taking account of the determined condition (14) between wheel and rail,
**characterised in that** the wear rate between wheel and rail is determined as model value (12) by means of a model (20).

2. Method according to claim 1,
wherein the read-in measured values (10) of the variables that can be measured by the sensor system of the rail vehicle are selected from measured values of a load pressure and/or a brake cylinder pressure and/or a wheel speed and/or the vehicle speed and/or the vehicle acceleration or deceleration and/or the atmospheric humidity.

3. Method according to any of the preceding claims,
wherein the model values (12) are determined by means of the model (20) from measured values (10) of a load pressure and/or a brake cylinder pressure and/or a wheel speed and/or the vehicle speed and/or the vehicle acceleration or deceleration and/or the atmospheric humidity.

4. Method according to claim 3,
wherein the place where the rail vehicle is located is determined and the model values (12) are determined by means of the model (20) taking account of its location.

5. Method according to any of the preceding claims,
wherein external values (13) of vehicle-external measuring devices are read in additionally and the model values (12) are determined taking additional account of the external values (13).

6. Method according to claim 5,
wherein the external values (13) of the variables that can be measured by the vehicle-external measuring devices are selected from measured values of a local frictional lock and/or a local degree of contamination and/or a local rail condition and/or local weather conditions and/or local temperatures and/or local rail roughness values.

7. Method according to any of the preceding claims,
wherein the roughness or the friction coefficient between wheel and rail and/or the temperature at the contact point between wheel and rail and/or an intermediate layer between wheel and rail and/or the normal force between wheel and rail are determined as model values (12) by means of the model (20).

8. Method according to any of the preceding claims,
wherein the force that can be transmitted in the contact between wheel and rail is determined as a condition (14) between wheel and rail.

9. Method according to any of the preceding claims,
wherein the slip (28) between wheel and rail is controlled when controlling (S16) the braking or driving force (24) acting between wheel and rail.

10. Method according to any of the preceding claims,
wherein the model values (12) are determined from the measured values (10) by means of a characteristic map model and/or an artificial neuronal network.

11. Method according to any of the preceding claims,
wherein the condition (14) between wheel and rail is determined from the measured values (10) and the model values (12) by means of a characteristic map model and/or an artificial neuronal network.

12. Device for optimising the frictional locking between wheel and rail, the device having:
an input for reading in measured values (10) for variables that can be measured with a sensor system of a rail vehicle,
a model by means of which model values (12) for further variables can be determined from the measured values (10),
a first device by means of which a condition (14) between wheel and rail can be determined from the measured values (10) and the model values (12) determined by means of the model (20),
a second device by means of which a braking or driving force (24) acting between wheel and rail can be controlled taking account of the determined condition (14) between wheel and rail,
**characterised in that** the wear rate between wheel and rail is determined as model value (12) by means of a model (20).

13. Device according to claim 12,
wherein the model (20) is designed such that the roughness or the friction coefficient between wheel and rail and/or the temperature between wheel and rail and/or an intermediate layer between wheel and rail and/or the normal force between wheel and rail can be determined from measured values of a load pressure and/or a brake cylinder pressure and/or a wheel speed and/or the vehicle speed and/or the vehicle acceleration or deceleration and/or the atmospheric humidity.

14. Device according to claim 12 or 13,
wherein the device further comprises an input for reading in external measured values (13) for variables that can be measured with vehicle-external measuring devices, wherein the model is designed such that the model values (12) for the further variables can be determined taking additional account of the external values (13), and wherein the first device is designed such that the condition between wheel and rail can be determined taking additional account of the external values (13).

15. Device according to claim 14,
wherein measured values of a local frictional lock and/or a local degree of contamination and/or a local rail condition and/or local weather conditions and/or local temperatures and/or local rail roughness values can be read in as external measured values (13).

16. Device according to any of claims 12 to 15,
wherein the first device is designed such that the force that can be transmitted in the contact between wheel and rail can be determined.

17. Device according to any of claims 12 to 16,
wherein the model (20), by means of which the model values (12) can be determined from the measured values (10), has a characteristic map and/or an artificial neuronal network.

18. Device according to any of claims 12 to 17,
wherein the first device, by means of which the condition (14) between wheel and rail can be determined from the measured values (10) and the model values (12) determined by means of the model (20), has a characteristic map and/or an artificial neuronal network.

## Revendications

1. Procédé d'optimisation de l'utilisation de l'adhérence entre la roue et le rail,
comprenant les stades suivant :
lecture (S10) de valeur (10) de mesure de grandeurs mesurables par un système de détection d'un véhicule ferroviaire,
définition (S12) de valeurs (12) de modèle pour d'autres grandeurs à partir des valeurs (10) de mesure au moyen d'un modèle (20),
détermination (S14) d'un état (14) entre la roue et le rail à partir des valeurs (10) de mesure lues et des valeurs (12) de modèle définies au moyen du modèle (20),
régulation (S16) d'une force (24) de frein ou d'entraînement entre la roue et le rail en tenant compte de l'état (14) déterminé entre la roue et le rail,
**caractérisé en ce que** l'on définit au moyen du modèle (20) comme valeur (12) de modèle le taux d'usure entre la roue et le rail.

2. Procédé suivant la revendication 1,
dans lequel les valeurs (10) de mesure lues des grandeurs mesurables par le système de détection du véhicule ferroviaire sont choisies parmi des valeurs de mesure d'une pression de charge et/ou d'une pression de cylindre de frein et/ou d'une vitesse de rotation de roue et/ou de la vitesse du véhicule et/ou de l'accélération du véhicule ou de la décélération du véhicule et/ou de l'humidité de l'air.

3. Procédé suivant l'une des revendications précédentes,
dans lequel on détermine les valeurs (12) de modèle au moyen du modèle (20) à partir des valeurs (10) de mesure d'une pression de charge et/ou d'une pression de cylindre de frein et/ou d'une vitesse de rotation de roue et/ou de la vitesse du véhicule et/ou de l'accélération du véhicule ou de la décélération du véhicule et/ou de l'humidité de l'air.

4. Procédé suivant la revendication 3,
dans lequel on définit l'emplacement où se trouve le véhicule ferroviaire et on détermine les valeurs (12) de modèle au moyen du modèle (20) en tenant compte de l'emplacement.

5. Procédé suivant l'une des revendications précédentes,
dans lequel on lit en outre des valeurs (13) de mesure extérieures de systèmes de mesure extérieurs au véhicule et on définit les valeurs (122) de modèle en tenant compte en outre des valeurs (13) de mesure extérieures.

6. Procédé suivant la revendication 5,
dans lequel les valeurs (13) de mesure extérieures des grandeurs mesurables par les systèmes de mesure extérieurs au véhicule sont choisies parmi des valeurs de mesure d'une adhérence locale et/ou d'un degré de pollution local et/ou d'un état local du rail et/ou de conditions atmosphériques locales et/ou de températures locales et/ou de rugosité locale du rail.

7. Procédé suivant l'une des revendications précédentes,
dans lequel, au moyen du modèle (20) on définit comme valeurs (12) de modèle la rugosité ou le coefficient de frottement entre la roue et le rail et/ou la température au point de contact entre la roue et le rail et/ou une couche intermédiaire entre la roue et le rail et/ou la force normale entre la roue et le rail.

8. Procédé suivant l'une des revendications précédentes,
dans lequel on détermine comme état (14) entre la roue et le rail la force pouvant être transmise au contact entre la roue et le rail.

9. Procédé suivant l'une des revendications précédentes,
dans lequel lors de la régulation (S16), on régule la force (24) de freinage et/ou d'entraînement, s'appliquant entre la roue et le rail, du glissement (28) entre la roue et le rail.

10. Procédé suivant l'une des revendications précédentes,
dans lequel on définit les valeurs (12) de modèle à partir des valeurs (10) de mesure au moyen d'un modèle de courbe caractéristique et/ou d'un réseau neuronal artificiel.

11. Procédé suivant l'une des revendications précédentes,
dans lequel on définit l'état (14) entre la roue et le rail à partir des valeurs (10) de mesure et des valeurs (12) de modèle au moyen d'un modèle de courbe caractéristique et/ou d'un réseau neuronal artificiel.

12. Système d'optimisation de l'utilisation de l'adhérence entre la roue et le rail,
dans lequel le système comporte :
une entrée de lecture de valeurs (10) de mesure pour des grandeurs de mesure, qui sont mesurables par un système de détection d'un véhicule ferroviaire,
un modèle au moyen duquel des valeurs (12) de modèle pour d'autres grandeurs peuvent être définies à partir des valeurs (10) de mesure,
un premier dispositif, au moyen duquel un état (14) entre la roue et le rail peut être déterminé à partir des valeurs (10) de mesure et des valeurs (12) de modèle définies au moyen du modèle (20),
un deuxième dispositif, au moyen duquel une force (24) de freinage ou d'entraînement, s'appliquant entre la roue et le rail, peut être régulée en tenant compte de l'état (14) déterminé entre la roue et le rail,
**caractérisé en ce que** l'on définit au moyen du modèle (20) comme valeur (12) de modèle le taux d'usure entre la roue et le rail.

13. Système suivant la revendication 12,
dans lequel le modèle (20) est conformé de manière à pouvoir, au moyen du modèle (20), définir la rugosité ou le coefficient de frottement entre la roue et le rail et/ou la température entre la roue et le rail et/ou une couche intermédiaire entre la roue et le rail et/ou la force normale entre la roue et le rail à partir des valeurs de mesure d'une pression de charge et/ou d'une pression de cylindre de frein et/ou d'une vitesse de rotation de roue et/ou de la vitesse du véhicule et/ou l'accélération du véhicule ou de la décélération du véhicule et/ou de l'humidité de l'air.

14. Système suivant la revendication 12 ou 13,
dans lequel le système comporte en outre une entrée de lecture de valeurs (13) de mesure extérieures pour des grandeurs de mesure qui sont mesurables par des systèmes de mesure extérieurs au véhicule, le modèle est conformé de manière à ce que les valeurs (12) de modèle pour les autres grandeurs puissent être définies en tenant compte en outre des valeurs (13) de mesure extérieures et le premier dispositif est conformé de manière à pouvoir déterminer l'état entre la roue et le rail en tenant compte en outre des valeurs (13) de mesure extérieures.

15. Système suivant la revendication 14,
dans lequel peuvent être lues comme valeurs (13) de mesure extérieures les valeurs de mesure d'une adhérence locale et/ou d'un degré de pollution local et/ou d'un état local du rail et/ou de conditions d'intempéries locales et/ou de températures locales et/ou de rugosité locale du rail.

16. Système suivant l'une des revendications 12 à 15,
dans lequel le premier dispositif est conformé de manière à pouvoir déterminer la force pouvant être transmise au contact entre la roue et le rail.

17. Système suivant l'une des revendications 12 à 16,
dans lequel le modèle (20), au moyen duquel les valeurs (12) de modèle peuvent être définies à partir des valeurs (10) de mesure, a une courbe caractéristique et/ou un réseau neuronal artificiel.

18. Système suivant l'une des revendications 12 à 17,
dans lequel le premier dispositif , au moyen duquel l'état (14) entre la roue et le rail peut être déterminé à partir des valeurs (10) de mesure et des valeurs (12) de modèle définies au moyen du modèle (20), a une courbe caractéristique et/ou un réseau neuronal artificiel.
